Europäisches Patentamt

European Patent Office

Office européen des brevets

(11) Veröffentlichungsnummer: **0 436 807 A1**

(12) **EUROPÄISCHE PATENTANMELDUNG**

(21) Anmeldenummer: 90122011.1

(22) Anmeldetag: 17.11.90

(51) Int. Cl.⁵: **B22D 19/14, C23C 2/00**

(30) Priorität: 14.12.89 AT 2845/89

(43) Veröffentlichungstag der Anmeldung:
17.07.91 Patentblatt 91/29

(84) Benannte Vertragsstaaten:
AT CH DE FR GB IT LI

(71) Anmelder: **Austria Metall Aktiengesellschaft**

**A-5282 Braunau am Inn(AT)**

(72) Erfinder: **Degischer, Hans Peter, Dr.**
**Guritzerstrasse 38**
**A-5020 Salzburg(AT)**

(74) Vertreter: **Pohlmann, Eckart, Dipl.-Phys. et al**
**WILHEMS, KILIAN & PARTNER Patentanwälte**
**Eduard-Schmid-Strasse 2**
**W-8000 München 90(DE)**

(54) **Infiltrationsdüse zur Herstellung von Metallmatrixverbundmaterial.**

(57) Infiltrationsdüse zur Herstellung von Metallmatrixverbundmaterial, wobei die Infiltrationsdüse in vertikaler Achsialerstreckung einen durchgehenden Kanal mit zueinander fluchtenden Einlauf- und Austrittsteile (1,2) besitzt, von einem Behälter (3) umschlossen ist, der mit dem Einlauf- und Austrittsteil jeweils kooperierende Öffnungen aufweist und wo in diesem Kanal zwischen Einlaß- und Austrittsteil Öffnungen (4) zum Einfließen der Schmelze (5) vorhanden sind.

Fig.1

EP 0 436 807 A1

# INFILTRATIONSDÜSE ZUR HERSTELLUNG VON METALLMATRIXVERBUNDMATERIAL.

Zur Herstellung von stangenförmigen Metallmatrixverbundmaterialien sind diverse Düsen bekannt. Manche sind an der Austrittsöffnung eines Behälters mit Ein- und Austrittsöffnung für die Faser angeordnet. Manche Behälter besitzen keine Eintrittsöffnung, sondern enthalten das zu infiltrierende Fasermaterial im Gasraum des Behälters. Die Behälter sind mit dem flüssigen Material gefüllt und der nicht mit flüssigem Material gefüllte Teil mit Schutzgas beaufschlagt. Die Faser läuft vertikal oder horizontal durch den Behälter, wird dabei vom Material durchtränkt und tritt an der Auslauföffnung, die gekühlt ist, wieder aus dem Behälter heraus.

Es sind auch solche Düsen bekannt, die eine durchlaufende Öffnung aufweisen, durch die die Faser kontinuierlich durchgezogen wird und im Bereich des Durchlaufes in der Düse eine zusätzliche Öffnung zum Eindringen des flüssigen Materials angeordnet haben. In der Düse wird die Faser mit flüssigen Material durchdrängt und so der Faserverbund hergestellt.

In beiden Fällen müssen Ein- und Austrittsöffnung gas- und flüssigkeitsdicht abgeschlossen sein und gleichzeitig die Bewegung der Faserstränge erlauben. Dies ist besonders schwierig, weil:
- Die Wärmeabfuhr muß an beiden Seiten zur Erstarrung führen, um dazwischen den Druckaufbau zu ermöglichen.
- Die Erstarrungsfront darf nicht an den Düsenwänden haften, damit die Faserbeweglichkeit gewährleistet bleibt.
- Die Verweilzeit der Fasern in der Schmelze muß so kurz als möglich sein, um Faserschädigungen zu vermeiden.

Erfindungsgemäß wird dadurch Abhilfe geschaffen, daß die Infiltrationsdüse in vertikaler Achsialerstreckung einen durchgehenden Kanal mit zueinander fluchtenden Einlauf- und Austrittsteil besitzt, von einem Behälter umschlossen ist, der mit dem Einlauf- und Austrittsteil jeweils kooperierende Öffnungen aufweist und wo in diesem Kanal zwischen Einlaß- und Austrittsteil Öffnungen zum Einfließen der Schmelze vorhanden sind.

Diese Infiltrationsdüse hat gegenüber bekannten Ausführungen nachstehende Vorteile:
- Konzentrische Steuerung der Wärmeabfuhr nach außen.
- Geringer Abstand zwischen Ein- und Austrittsöffnung.
- Das Düsenmaterial muß nicht gasdicht sein, jedoch möglichst inert gegenüber Aluminiumschmelze.
- Ausgehend von der Schmelzeintrittsöffnung wird der Infiltrationsdruck entlang der einlaufenden Fasern in der Schmelze derart aufgebracht, daß das mit Umgebungsdruck mit den Faserbündeln an der Fasereintrittsöffnung mitgeführte Gas (Luft) nach außen verdrängt wird.
- Der Temperaturverlauf an der Austrittsdüse kann über Zusatzheizung bzw. Kühlung gesteuert werden.
- Die Nichtbenetzbarkeit der Fasern kann ausgenützt werden, um die Faserstränge zentral dicht zu packen.
- Der Druckbehälter kann gekühlt ausgeführt werden.

In weiterer Ausgestaltung kann die Infiltrationsdüse so ausgestaltet sein, daß der die Infiltrationsdüse umschließende Behälter einen Gasdruck kleiner als 10 MPa aufweist oder mit Schutzgas beaufschlagt ist und im Bereich des Austrittsteiles Heizringe angebracht sind.

Weiters kann die Infiltrationsdüse so ausgestaltet sein, daß im Bereich um die Öffnungen zum Einfließen der Schmelze ein Schmelztiegel um die Infiltrationsdüse angeordnet ist und zwischen dem Schmelztiegel und der Behälterwand Heizstäbe angebracht sind.

Durch die Anordnung der Faserrolle außerhalb des Behälters wird diese nicht mit Gas durchsetzt, wodurch ungewünschte Porositäten im fertigen Faserverbundmaterial vermieden werden. Durch die Beaufschlagung des die Infiltrationsdüse umschließenden Behälters mit Schutzgas wird ein Reagieren mit der Schmelze vermieden.

Durch die Anordnung von Heizringen und/oder Kühlringen am Austrittsteil der Infiltrationsdüse ist es möglich, die Temperatur so zu steuern, daß die Erstarrungsfront der Schmelze in der Düse sowohl dicht um die Faser festpackt, als auch das Eindringen von Luft in die Düse verhindert.

Durch die Anordnung des Schmelztiegels um die Infiltrationsdüse ist eine besonders kompakte Ausführungsform gegeben. Es ist somit durch die Beaufschlagung des Behälters mit Schutzgas das Einfließen der Schmelze in die Infiltrationsdüse steuerbar und durch die zusätzlichen Heizstäbe zwischen Schmelztiegel und Behälterwand eine genaue Temperatursteuerung erzielbar.

Durch die Verwendung eines Keramik- oder Grafitrohres für den Einlaufteil der Infiltrationsdüse wird die Faser gut geführt und ihr Abrieb vermieden. Durch Einbringung eines Formkörpers in die Infiltrationsdüse können auch Hohlprofile erzeugt werden. Je nach gewünschter Form des Profils können der Querschnitt des durchgehenden Kanals und der Querschnitt des eingebrachten Formkörpers zueinander abgestimmt sein.

Um den Formkörper gut im Kanal positionieren zu können, läßt man ihn beidseitig aus der Infiltrationsdüse herausragen und hängt ihn oberhalb der Faserrollen auf.

Falls sehr dünne Profile oder Bänder gewünscht werden, ist es besonders vorteilhaft, daß die Infiltrationsdüse lediglich einseitig eine Öffnung zum Einfließen der Schmelze aufweist, direkt an einer vertikalen Wand des Behälters angeordnet ist und de Querschnitt des durchgehenden Kanals in der Ebene normal zu dieser vertikalen Wand des Behälters klein ist.

Es hat sich als erfindungsgemäß sehr günstig gezeigt, die Infiltrationsdüse so zu betreiben, daß das Fasermaterial kontinuierlich in die Einlauföffnung gelangt, durch die seitlichen Öffnungen Al-Schmelze unter Druck in das Fasermaterial gelangt, um diese Fasern erstarrt und das mit erstarrter Schmelze durchdrungene und umhüllte Fasermaterial kontinuierlich durch die Austrittsöffnung gelangt. Unterhalb der Austrittsöffnung erweisen sich Führungsrollen als vorteilhaft, die dem Profil (Metallmatrixverbundmaterial) eine maßgenaue Form und eine gute Oberflächenqualität verleihen.

In einer weiteren erfindungsgemäßen vorteilhaften Verfahrensweise ist es auch möglich, so vorzugehen, daß das Fasermaterial im Bereich des Kanals erwärmt wird, die Aluminiumschmelze im Bereich der seitlichen Öffnungen beheizt und dann die mit dem Fasermaterial in Berührung stehende Schmelze gekühlt wird.

Diese beiden Verfahren sind sowohl zur Herstellung von achsensymmetrischen Profilen verwendbar, bei denen die Schmelze allseits durch Ringdüsen dem Kanal und somit der Faser zugeführt wird, als auch für unsymmetrische Flachprofile bei einseitiger Zuführung der Schmelze.

So können je nach auf die Schmelze wirkenden Druck Geschwindigkeit des Fasermaterials und gewählter Temperatur verschieden stark durchtränkte Faserverbundmaterialien aus unterschiedlich benetzbaren bzw. nicht benetzbaren Fasern hergestellt werden.

Die Erfindung wird anhand der nachstehenden Zeichnungen beschrieben. Es zeigen:

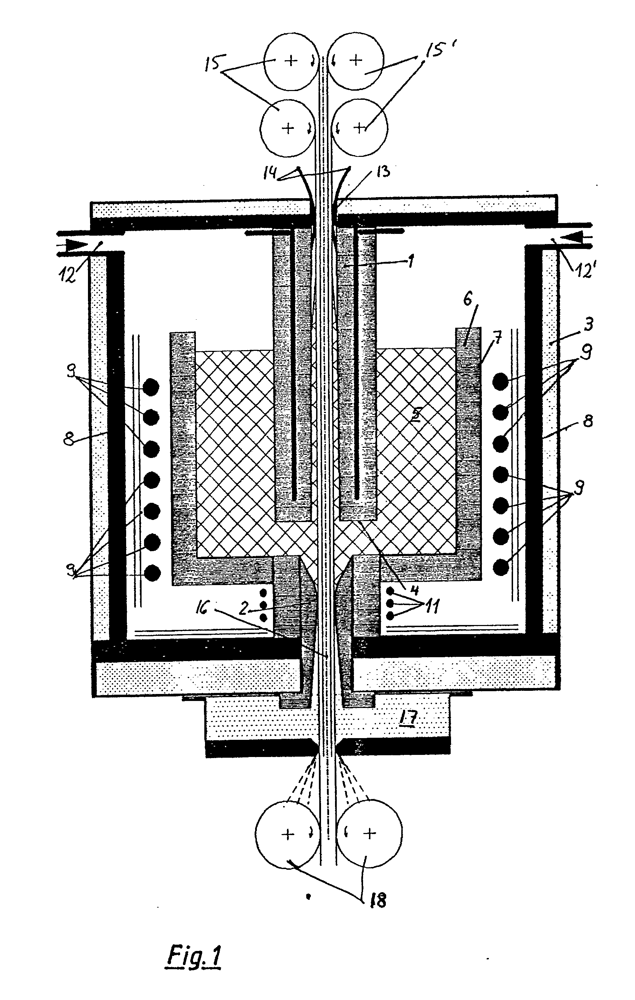

Fig. 1    eine erfindungsgemäße Infiltrationsdüse.

Fig. 2    eine Variante der erfindungsgemäßen Infiltrationsdüse mit eingeschobenen Formkörper.

Fig. 3    eine Variante für sehr dünne bzw. bandförmige Materialien.

Die Infiltrationsdüse besteht aus dem Einlaufteil 1 und dem Austrittsteil 2. Sie ist in einem Behälter 3 angeordnet. Um die Eintrittsöffnungen 4 für die Schmelze 5 ist ein Schmelztiegel 6 vorhanden, der die Düse in diesem Bereich umgibt. Zwischen den Außenwänden 7 des Schmelztiegels 6 und der vertikalen Wand 8 des Behälters 3 sind Heizstäbe 9 angebracht. Unterhalb des Schmelztiegels 6 kann vorteilhaft rund um den Austrittsteil eine Zusatzheizung 11 angeordnet sein. Durch die Öffnung 12 des Behälters 3 kann je nach Bedarf der Behälter 3 mit Schutzgas gefüllt oder evakuiert werden. Zur besseren Führung der Faser sind im Bereich des Einlaufteiles 1 und der dazugehörigen Öffnung 13 des Behälters 3 Gleitführungen 14 angebracht. Die Faserrollen 15 bzw. 15' sind oberhalb des Gefäßes aufgehängt. Um eine zusätzliche Kühlung des mit Schmelze infiltrierten Faserstranges 16 sind im Bereich des Austrittsteiles 2 ein Kühlwassermantel angeordnet.

Zur leichteren Abfuhr des fertigen faserverstärkten Verbundmaterials 17 sind Führungs- bzw. Formgebungsrollen 18 unterhalb des Behälters 3 vorhanden.

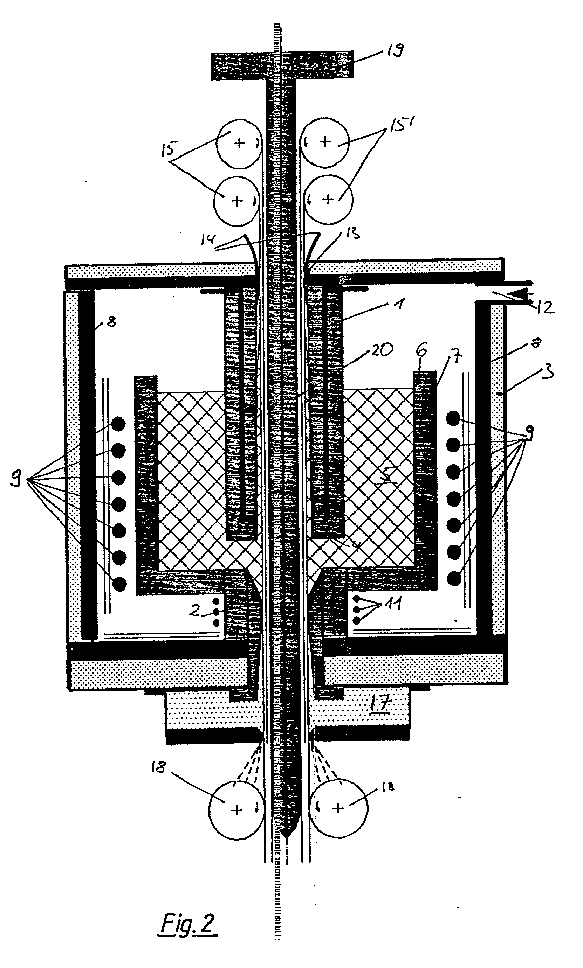

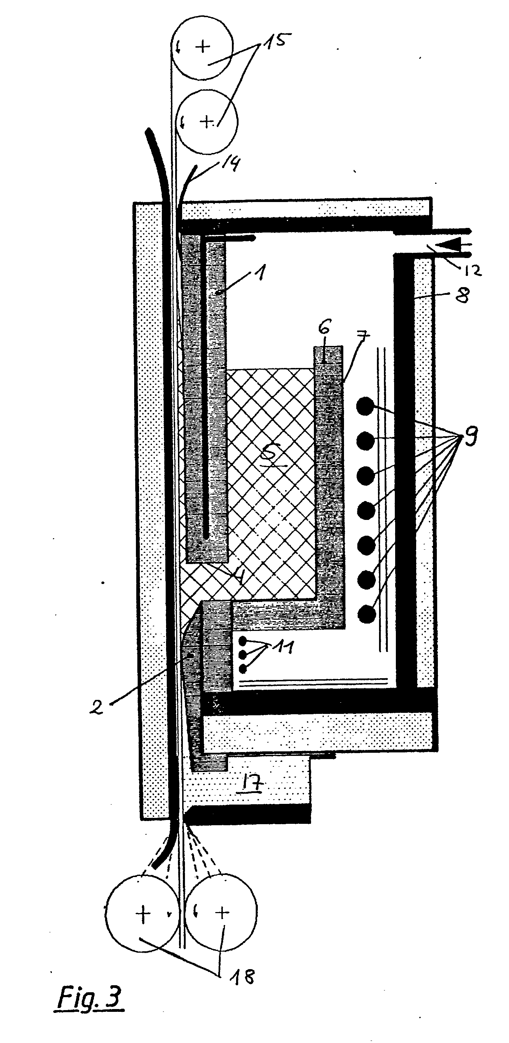

In der in Fig. 2 dargestellten Variante ist ein Formkörper 19 in den durchgehenden Kanal 20 eingeschoben. Er ragt beidseitig aus dem Behälter 3 heraus und ist besonders günstig oberhalb der Faserrollen 15, 15' zu fixieren.

In der Fig. 3 ist eine unsymmetrische Bauform des Behälters 3 dargestellt, bei dem die Infiltrationsdüse nahe an einer Behälterwand angeordnet ist und der Einfluß der Schmelze lediglich von einer Seite erfolgt.

Die Erfindung ist nicht auf die angeführten Beispiele beschränkt.

**Patentansprüche**

1.  Infiltrationsdüse zur Herstellung von Metallmatrixverbundmaterial, dadurch gekennzeichnet, daß die Infiltrationsdüse in vertikaler Achsialerstreckung einen durchgehenden Kanal mit zueinander fluchtenden Einlauf-und Austrittsteil besitzt, von einem Behälter umschlossen ist, der mit dem Einlauf- und Austrittsteil jeweils kooperierende Öffnungen aufweist und wo in diesem Kanal zwischen Einlaß- und Austrittsteil Öffnungen· zum Einfließen der Schmelze vorhanden sind.

2.  Infiltrationsdüse nach Anspruch 1, dadurch gekennzeichnet, daß der die Infiltrationsdüse umschließende Behälter einen Gasdruck kleiner als 10 MPa aufweist oder mit Schutzgas beaufschlagt ist.

3.  Infiltrationsdüse nach einem der vorhergehenden Ansprüche, dadurch gekennzeichnet, daß im Bereich des Austrittsteiles Heiz- und/oder Kühlringe angebracht sind.

4.  Infiltrationsdüse nach einem der vorhergehenden Ansprüche, dadurch gekennzeichnet, daß im Bereich um die Öffnungen zum Einfließen der Schmelze ein Schmelztiegel um die Infiltrationsdüse angeordnet ist und zwischen dem Schmelztiegel und der Behälterwand Heizstäbe angebracht sind.

5. Infiltrationsdüse nach einem der vorhergehenden Ansprüche, dadurch gekennzeichnet, daß der Einlaufteil aus einem Keramik- oder Grafitrohr besteht.

6. Infiltrationsdüse nach einem der vorhergehenden Ansprüche, dadurch gekennzeichnet, daß im durchgehenden Kanal der Infiltrationsdüse ein Formkörper eingebracht ist und dieser beidseitig aus der Infiltrationsdüse ragt.

7. Infiltrationsdüse nach einem der vorhergehenden Ansprüche, dadurch gekennzeichnet, daß die Infiltrationsdüse lediglich einseitig eine Öffnung zum Einfliessen der Schmelze aufweist, direkt an einer vertikalen Wand des Behälters angeordnet ist und der Querschnitt des durchgehenden Kanals in der Ebene normal zu dieser vertikalen Wand des Behälters klein ist.

8. Verfahren zum Betrieb einer Infiltrationsdüse nach einem der vorhergehenden Ansprüche, dadurch gekennzeichnet, daß das Fasermaterial kontinuierlich in die Einlauföffnung gelangt, durch die seitlichen Öffnungen Al-Schmelze unter Druck in das Fasermaterial gelangt, um diese Fasern erstarrt und das mit erstarrter Schmelze durchdrungene und umhüllte Fasermaterial kontinuierlich durch die Austrittsöffnung gelangt.

9. Verfahren zum Betrieb einer Infiltrationsdüse nach Anspruch 4, dadurch gekennzeichnet, daß das Fasermaterial im Bereich des Kanals erwärmt wird, die Aluminiumschmelze im Bereich der seitlichen Öffnungen beheizt und dann die mit dem Fasermaterial in Berührung stehende Schmelze gekühlt wird.

_Fig.1_

_Fig.2_

_Fig. 3_

Europäisches
Patentamt

**EUROPÄISCHER
RECHERCHENBERICHT**

Nummer der Anmeldung

**EP 90 12 2011**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (int. Cl.5) |
|---|---|---|---|
| X | SOVIET INVENTIONS ILLUSTRATED, Sektion Mechanical, Woche K30, 7. September 1983, Zusammenfassung Nr. 83-721993/30, Derwent Publications Ltd, London, GB; & SU-A-960 311 (HARDWARE IND. RES.) 23-09-1982 * Figur * | 1 | B 22 D 19/14 C 23 C 2/00 |
| Y | IDEM | 2-5,8,9 | |
| Y | EP-A-0 304 167 (CRAY ADVANCED MATERIALS) * Patentansprüche; Figur * | 2-5,8,9 | |
| A | FR-A-2 031 719 (SOCIETE DU VERRE TEXTILE) * Seiten 4,7; Figur 6 * | 1,8 | |
| A | FR-A-2 427 315 (COMMISSARIAT A L'ENERGIE ATOMIQUE) * Patentansprüche 13-18; Figur 1 * | 1,3,8 | |
| A | PATENT ABSTRACTS OF JAPAN, Band 9, Nr. 94 (M-374)[1817], 24. April 1985; & JP-A-59 220 251 (NISSAN JIDOSHA) 31-05-1983 * Kurzfassung; Figur * | | RECHERCHIERTE SACHGEBIETE (Int. Cl.5) |
| A | DE-A-2 814 773 (A. BERG et al.) * Seite 14, Absatz 1; Figuren 1-2 * | 6 | B 22 D B 29 C C 23 G |
| A | DE-A-1 521 348 (VEREINIGTE DRAHT- UND KABELWERKE) * Figur * | 1 | |
| A | DE-A-3 535 230 (MANNESMANN AG) * Figur 2; Spalte 2 * | 1 | |

−/−

Der vorliegende Recherchenbericht wurde für alle Patentansprüche erstellt

| Recherchenort | Abschlußdatum der Recherche | Prüfer |
|---|---|---|
| Den Haag | 25. März 91 | BOMBEKE M.J.P. |

**Europäisches**
**Patentamt**

# EUROPÄISCHER
# RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | CH-A-4 514 19   (GENERAL ELECTRIC) <br> – – – | | |
| A | FR-A-2 342 350   (SOCIETE DE VENTE DE L'ALUMINIUM PECHINEY) <br> – – – | | |
| A | DE-A-3 638 249   (FUJIKURA LTD) <br> – – – | | |
| A | WO-A-8 103 136   (EKEROT SVEN) <br> – – – | | |
| A | US-A-3 749 057   (B.B. GARICK) <br> – – – | | |
| A | US-A-3 842 896   (E.J. DOBO) <br> – – – – – | | |

**RECHERCHIERTE SACHGEBIETE (Int. Cl.5)**

Der vorliegende Recherchenbericht wurde für alle Patentansprüche erstellt

| Recherchenort | Abschlußdatum der Recherche | Prüfer |
|---|---|---|
| Den Haag | 25 März 91 | BOMBEKE M.J.P. |